Europäisches Patentamt

European Patent Office

Office européen des brevets

(19)

(11) Publication number: **0 130 463**
A2

(12) **EUROPEAN PATENT APPLICATION**

(21) Application number: **84107019.6**

(22) Date of filing: **19.06.84**

(51) Int. Cl.⁴: **F 16 F 9/30**, F 16 F 1/36, B 60 K 5/12, B 60 R 19/26, F 16 F 7/00

(30) Priority: **27.06.83 IT 2180483**

(43) Date of publication of application: **09.01.85** Bulletin 85/2

(84) Designated Contracting States: **DE FR GB**

(71) Applicant: **INDUSTRIE PIRELLI S.p.A., Piazzale Cadorna, 5, I-20123 Milan (IT)**

(72) Inventor: **Tangorra, Giorgio, Via Ramazzotti, 12, Monza (Milan) (IT)**

(74) Representative: **Mariani, Giorgio, Dr. et al, INDUSTRIE PIRELLI S.p.A. Direzione Brevetti Piazzale Cadorna, 5, I-20123 Milano (IT)**

(54) **Damper device having hysteretic effect.**

(57)    The invention refers to a damper device having a hysteretic effect, which is utilizable as a damper for motorcars – particularly in car supports and in buffers, or even as buffers for trains, with comprising a pair of rigid elements (2) and (3), apt for sliding one inside the other, characterized by the fact of there being foreseen at least one protuberance (5), disposed perimetrically to one of said elements (2) or (3), and apt for being embedded in a layer of visco-elastic material that covers the other element (3) or (2), with eventual lubricating means being foreseen between the visco-elastic material layer (4) and the element (2) or (3) in contact with it, for restricting its surface friction.

DAMPER DEVICE HAVING HYSTERETIC EFFECT

Specification

The present invention has as its object, a damper device having a hysteretic effect, that is utilizable as a damper for motorcars - particularly in supports and buffers or bumpers, or even in the buffers of trains, comprised by a pair of preferably metallic elements, apt for sliding one into the other, one of said elements bearing at least one perimetrical protuberance that is apt for being embedded in a tract of visco-elastic material that covers the other element.

The Italian PATENT APPLICATIONS Nos. 20502 A/83 and 20503 A/83, filed on 8th. April 1983 in the name of the same Applicant, describe a damper device that comprises a plurality of rigid rotating-elements, interposed in-between one sliding tract of visco-elastic material and a sliding tract of metallic material, endowed with a relative movement such as to induce these rotating-elements to revolve - which causes a deformation of the visco-elastic material, with a consequent dissipation of energy. Practical tests carried-out on said already known devices have shown that the damping effect and the resulting dissipation of energy, can be obtained even if the rotating-elements are standing still - instead of rotating on the tract of visco-elastic material. It was the result of these practical observations that inspired the present invention, which proposes a damper device wherein the rigid rotating-elements are eliminated, and which also exploits the Newton's dissipation that is had through the hysteresis resulting from the deformation of a tract of visco-elastic material.

Hence, any eventual damper devices which exploit a dissipation of energy of the Coulomb's type, i.e. due to the surface friction between contacting elements that slide one with respect to the other, can be considered to be outside the ambit of the present invention. In fact, any such type of dissipation of energy is obviated in the device according to the present invention, apart from being because of its particular structure, also because of the eventual presence of greases or lubricants, in general, that are apt for restricting the surface friction existing between the contacting elements.

The damper device, which forms the object of the present invention, of the type comprising a pair of metallic elements that are apt for sliding one into the other, is characterized by the fact of foreseeing at least one protuberance, perimetrically disposed with regard to one of said elements and apt for being embedded in a tract of visco-elastic material that covers the other element, eventual greases, or lubricants in general, being foreseen between these elements, for restricting any friction between their surfaces.

In a preferred form of realization of this invention, said elements are constituted by a shaft, slidable inside a casing or collar, bearing on its inner side, a series of annular protuberances apt for being embedded in the tract of visco-elastic material covering said shaft, the mid-section of the profile of said tract of visco-elastic material, being either rectilinear or curved, as desired, so as to obtain (or not) a uniform damping effect for any whatsoever shifting, taking place between the two elements, from the preloaded static position.

Further characteristics of the damper device according to the present invention, will result clearer from the following detailed description of a realization, made purely by way of non-limiting example, illustrated with reference to the attached Tables of drawings, whereby:-

FIG. 1 - is a view of a mid-section of the damper device according to the invention;

FIG. 2 - is again a view of a mid-section of the device of FIG. 1, with certain variations in the realization;

FIG. 3 - is a view of a med-section showing a further variation of realization of the device of FIG. 1;

FIGS. 4 and 5 - illustrate partially in section and partially in an axonometrical view, two types of realization of the device according to the invention, as applied to a motor-car support;

FIG. 6 - illustrates partially in section, the device of the invention, as applied to train buffers;

FIGS. 7 and 8 - illustrate partially in section, respectively under normal conditions and then after an impact received, the device according to the invention, as applied to a motor-car bumper;

FIG. 9 - again shows the damper device, according to the invention, as applied to a motor-car bumper, in a diverse form of realization;

FIGS. 10 and 11 - moreover, illustrate some details of the device according to the invention - and reference to these shall be made, for providing a correct idea of the degree of embedment required for the rigid protuberances in the tract of visco-elastic material.

With reference to the above-said FIGURES, with the reference numeral 1, there is indicated the damper device in its complex whole, according to the present invention, in all its forms of realization and applications. Whereas, with the reference numerals 2 and 3, there have been indicated a pair of elements apt, respectively, for sliding one into the other. In the attached FIGURES, the identical reference numerals will be utilized for designating the elements which carry out the same function - even if they are diversely disposed, according to the particular form of realization employed.

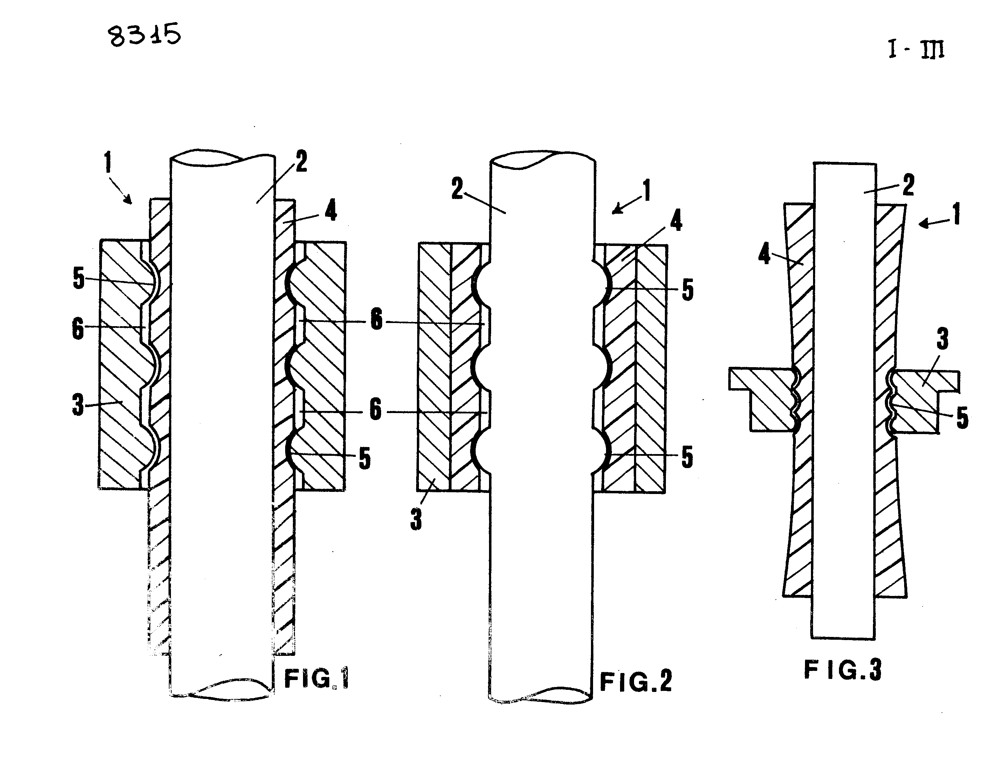

For the moment, with making particular reference to FIG. 1 - that shows a preferred form of realization according to the invention, the element 2 consists of a a rigid shaft; whereas the element 3 consists of a collar, that is also rigid, inside which said shaft it can slide axially in both senses. In FIG. 1, as also in FIGS. 2 and 3 - which shall be described further on, both the shaft 2 as well as the collar 3 are shown as having circular sections; but it is obvious that said elements can also have diverse sections - for example: polygonal sections.

The rigid shaft 2, presents a covering of visco-elastic material 4 - for preference: nitrile-rubber, inside which are embedded the annular protuberances 5 borne internally by the collar 3. The damping effect of the device is due exactly to the protuberances 5 which - by being embedded in the tract of visco-elastic material 4, tend to rapidly brake the axial shiftings of shaft 2.

A power transformed into heat, lost through the hysteresis of the visco-elastic material 4, becomes dissipated in the surrounding ambient - through the rigid collar 3 and the rigid rod 2.

It must be noted that the dissipation of energy is almost exclusively of the Newton's type - since this dissipation is due only to the hysteresis of the visco-elastic material 4, the surface friction (i.e. Coulomb's dissipation) between the contacting elements, being reduced to the minimum, thanks also to the presence of eventual lubricants introduced into the interspaces 6 that are determined in-between the layer of visco-elastic material 4 and the collar 3.

For preference, the annular protuberances 5 are disposed at diverse distances apart from each other, for the purpose of obviating that any successive shiftings of the shaft 2 - after a long stopping-period of the device under a certain load condition - could cause the annular protuberances 5 to simultaneously enter into the grooves left on the elastomeric material 4 by the relative adjacent protuberances.

The realization of FIG. 2 differs from that of FIG. 1, owing to the fact that, in the former instance, the layer of elastomeric material covers the inside of the collar 3; whereas the annular protuberances 5, are made on the rigid shaft 2. However, the effect obtained is the same - i.e. that of obtaining a constant damping action through relative axial shiftings between shaft 2 and collar 3.

In the realization of FIG. 3, the layer of visco-elastic material 4 covers the shaft 3 and has a parabolic cross-section - or curved however, with having a symmetry with respect to the central part. In this instance, the damping action increases progresively with the shifting and, at the same time, in both the sliding senses of shaft 2 with respect to collar 3 - for the shiftings around the condition found in FIG. 3, due to the greater embedment of the annular protuberances 5 in the layer of visco-elastic material 4.

Obviously, with a non-symmetrical profile of the visco-elastic layer 4, there can be had differentiated damping effects in both the sliding senses of the shaft 2, with respect to the collar 3.

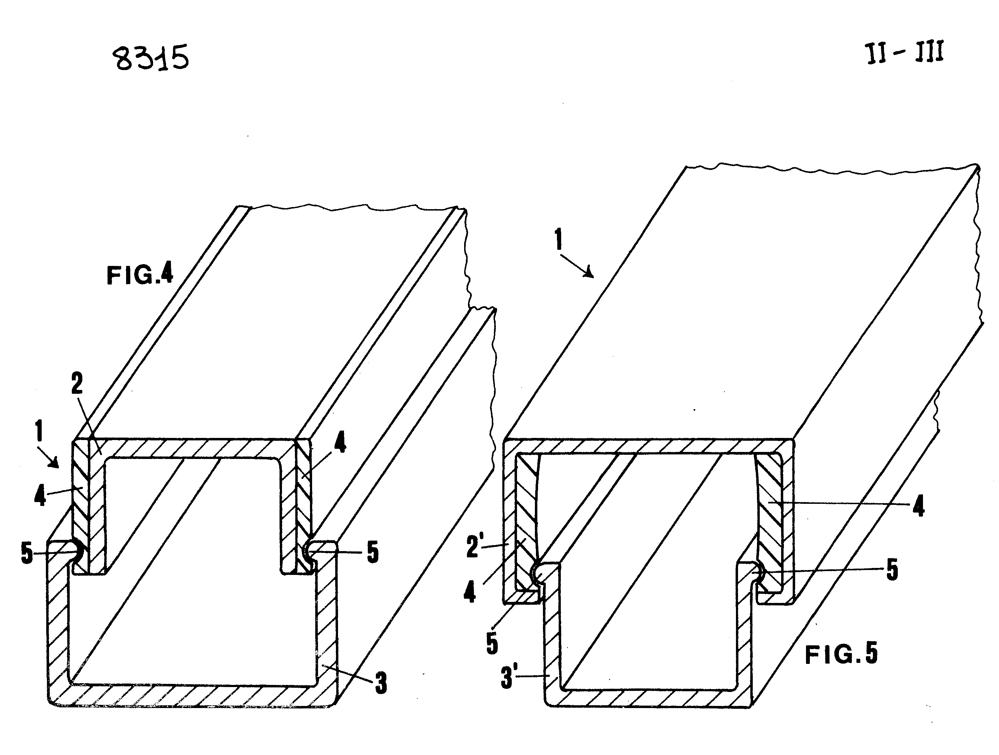

With reference to FIG. 4, there shall now be described an application of the damping device, according to the invention, to an automobile engine support.

In this instance, the element 3 has the form of a U-shaped rod resting upon a base, and presenting the protuberances 5, at their free end, directed towards inwardly, for becoming embedded in the visco-elastic material layers 4 that cover the lateral walls of the element 2 - which also has an upturned-U stirrup-shape and which is also apt for supporting at least a part of the engine. Naturally, it must be understood that between the elements 2 and 3, there is interposed a spacer-spring (or suchlike means), calibrated in such a way as to keep said elements at a desired distance, under dangerous static conditions - i.e. in the absence of oscillations.

In FIG. 5, there is again illustrated an application, of the damping device according to the invention, to an automobile engine support, with some variations with respect to the realization illustrated in FIG. 4.

In FIG. 5, the elements 2 and 3, for purposes of having a better clarity in the description, have been indicated with the numerals 2' and 3', because, in this instance, it is the element 3' that slides into the element 2', even though the function of both these elements is identical to that of the corresponding elements 2 and 3 in the realization of FIG. 4.

In the realization of FIG. 5, the protuberances at the end of the stirrup 3' are turned outwardly, and become embedded in the visco-elastic material layers 4, that cover the inside of the lateral walls of the superimposed stirrup 2'. As can be noted, the visco-elastic material layers 4 have a curved profile, in such a way as to have a diverse damping effect – depending upon the amplitude of the vibrations – from that of the preloaded static condition.

It is evident that in the realizations of FIGS. 4 and 5, the roles of the elements 2 and 3 can be inverted, and so also 2' and 3' respectively, by applying the visco-elastic material layer 4 to the element 3 or 3', and by making the protuberances 5 on the element 2 or 2'.

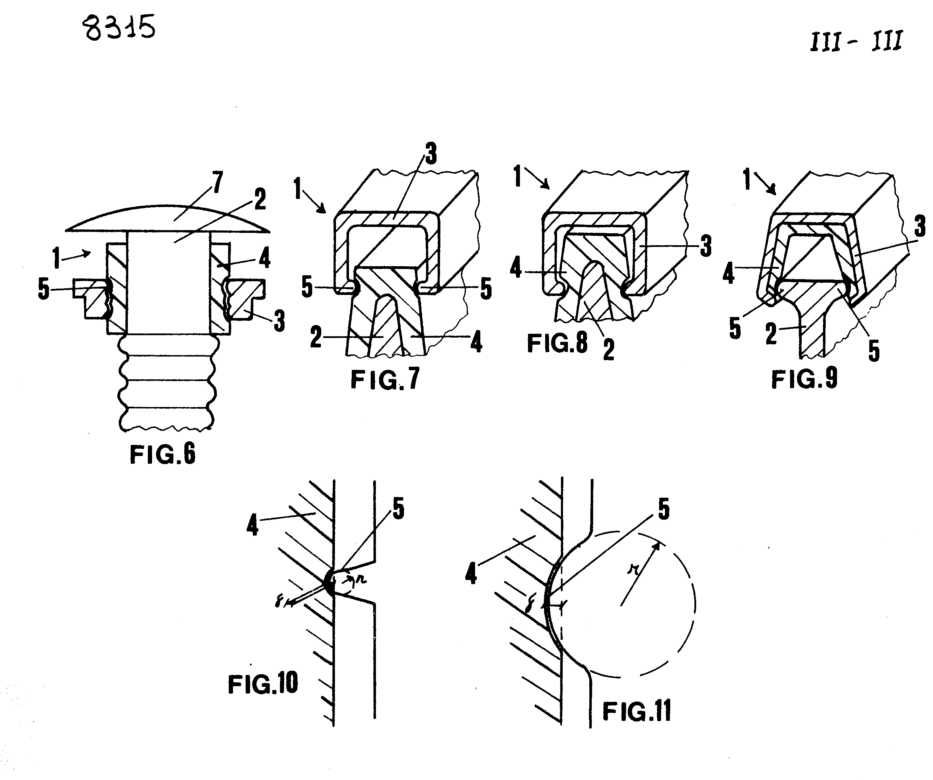

In FIG. 6, there is shown an application of the damper device according to the invention, for a train buffer, operating on the same principle described previously. To the element 3, there is rigidly connected the cap 7, which is apt for receiving the impact.

FIG. 7 illustrates an application of the damper device, according to the invention, to a buffer (or bumper) for motorcars. The rigid outer element 3, which acts as a bumper, has a U-shaped section, presenting at its end the protuberances 5, directed inwardly and apt for being embedded in the visco-elastic material layer 4, covering a metallic core comprised by the element 2. The profile of the visco-elastic material layer 4, has an increasing section, as it draws away from the element 3 – in such a way as to have a greater damping action as the impact force increases.

FIG. 8 illustrates the buffer of FIG. 7 – after an impact has taken place.

In the realization of FIG. 9, again for a car bumper, the visco-elastic material layer 4 covers the inside of the element 3, and in it there are found embedded the protuberances 5 borne by the element 2.

Of course, in the realizations of FIGS. 7 and 9, between the elements 2 and 3, there can be foreseen springs, or other elastic means, for spacing these elements apart – after an eventual impact.

In all these FIGURES, there have been omitted the purely elastic element, apt for returning the damper element to its at-rest state. Said element could even be made out of rubber, or out of steel having a known structure.

In FIGS. 10 and 11, there have been given the details of the damperg device according to the invention, illustrating a protuberance 5 about to be embedded in the visco-elastic material layer 4. In said FIGURES, there has been shown,

9    0130463

with a broken-line, the circle of tangency of the maximum point of the protuberance 5, or osculatory circle. With $\underline{r}$, there is indicated the radius of said circle, and with $\underline{S}$, the embedment of the protuberance 5 in the visco-elastic material layer 4.

For having a good functioning of the damper device, according to the invention, the ratio, between the embedment $\underline{\delta}$ and the radius $\underline{r}$, must not exceed the value 0.3 ($\underline{\delta} \leq 0.3 \underline{r}$).

Of course, to the previously described device, in its exemplifying forms of realization, there can also be carried out numerous structural variations, that are available to the technicians of this field, without such variations exiting from the ambit of the invention itself. For example: the protuberances have a covering with a low-friction coefficient base – such as of polytetra-fluoro-ethylene

0130463

WHAT IS CLAIMED IS:

1. Damping device having a hysteresis effect, comprising a pair of rigid elements (2) and (3), preferably metallic, apt for sliding one into the other, characterized by the fact that one of the elements (2) or (3) comprises at least one perimetrical protuberance (5), apt for being embedded in a visco-elastic material layer (4) that covers the other element, with eventual lubricating means being foreseen between the visco-elastic material layer (4) and the element (2) or (3) in contact with it, for limiting the surface friction.

2. Damping device, according to CLAIM 1, comprised by a shaft (2) made slidable in a collar (3), characterized by the fact that the said protuberances (5) are borne internally by the collar (3), while the visco-elastic material layer (4) covers the shaft (2).

3. Damping device, according to CLAIMS 1 and 2, wherein the visco-elastic material layer (4), has a rectilinear-profiled section.

4. Damping device, as in CLAIMS 1 and 2, wherein the visco-elastic material layer (4) has a thickness with a curved profile, that is non-symmetrical with respect to the central part.

5. Damping device, according to CLAIM 1, comprising a shaft (2) made slidable inside a collar (3), characterized by the fact that the said protuberances (5) are borne by the shaft (2), the visco-elastic material layer (4) covering the inside of the collar (3).

6.    Damping device, as in CLAIM 1, applied to the supports of automobile engines, characterized by the fact that the rigid elements (2) and (3), apt for sliding one into the other, have an upturned-U stirrup-form, with the protuberances (5) being made at the ends of one of these stirrups and embedded in the visco-elastic material layer (4), that covers the lateral walls of the other stirrup.

7. Damping device, as in CLAIM 1, applied to train buffers, wherein the shaft (2) is fixed rigidly to a cup (7), apt for receiving the impacts.

8.    Damping device, as in CLAIM 1, applied to car bumpers, characterized by the fact that the element (3) has a U-shaped section and that it embraces the element (2).

9.    Damping device, as in all the previous CLAIMS, wherein there exists – between the embedment $\underline{\delta}$ of the protuberance (5) in the visco-elastic material layer (4) and the radius $\underline{r}$ of the osculatory circle or of the tangency in the maximum point of the protuberance (5) – the following ratio: $\underline{\delta} \leq 0.3 \underline{r}$.

10.    Damping device, according to CLAIM 1, wherein the protuberances (5) are covered with a material having a low-friction coefficient base.

FIG.1

FIG.2

FIG.3

0130463

FIG.4

1

2

1

4

4

4

5

5

5

3

2'

4

5

3'

4

5

5

FIG.5

FIG.6

FIG.7

FIG.8

FIG.9

FIG.10

FIG.11